# EUROPÄISCHE PATENTSCHRIFT

(11) **EP 2 379 873 B1**
(45) Veröffentlichungstag und Bekanntmachung des Hinweises auf die Patenterteilung: **09.04.2014**
(21) Anmeldenummer: 09744658.7
(22) Anmeldetag: 19.10.2009
(51) Int. Cl.: F02N 11/08, H02P 7/00

(54) **VORRICHTUNG ZUM ZUFÜHREN ELEKTRISCHER ENERGIE ZU EINEM ELEKTROMOTOR**
APPARATUS FOR SUPPLYING ELECTRICAL POWER TO AN ELECTRIC MOTOR
DISPOSITIF D'ALIMENTATION D'UN MOTEUR ÉLECTRIQUE EN ÉNERGIE ÉLECTRIQUE

(30) Priorität: 16.12.2008 DE 102008054720
(43) Veröffentlichungstag der Anmeldung: 26.10.2011
(73) Patentinhaber: Robert Bosch GmbH, 70442 Stuttgart (DE)
(72) Erfinder: MUELLER, Wolfgang, 70439 Stuttgart (DE); REITEMANN, Guenter, 71701 Schwieberdingen (DE); MERKLE, Michael, 70192 Stuttgart (DE); ABELE, Marcus, 71701 Schwieberdingen (DE)
(86) Internationale Anmeldenummer: PCT/EP2009/063680
(87) Internationale Veröffentlichungsnummer: WO 2010/072435

(56) Entgegenhaltungen:
- DE-A1- 10 317 093
- JP-A- 5 328 530
- JP-A- 2004 254 376
- JP-A- 2006 029 142
- US-A1- 2003 042 873

## Beschreibung

### Stand der Technik

Die vorliegende Erfindung betrifft das Gebiet der elektrischen Motoren in Fahrzeugantrieben.

In modernen Hybridantrieben mit einem Verbrennungsmotor und einer weiteren Antriebsquelle, beispielweise einem Elektromotor, wird dieser als Starter auch zum Anlassen des Verbrennungsmotors verwendet. Hierzu ist insbesondere eine ausreichende Dimensionierung elektrischer Bauteile notwendig, weil beim Anlassen eines Verbrennungsmotors hohe Leistungen und hohe Ströme benötigt werden. So können die erforderlichen Spitzenströme für den Starter je nach Größe des Fahrzeugmotors mehrere 100 Ampere bis zu 1000 Ampere oder sogar mehr betragen. Diese hohen Ströme werden bei konventionellen Bordnetztopologien aus einer Bordnetz- bzw. Starterbatterie gespeist und üblicherweise durch Leitungswiderstandsverhältnisse und Komponenteninnenwiderstände im Bordnetz, wie beispielsweise einem Innenwiderstand der Starterbatterie oder des Starters, jedoch oft nicht ausreichend begrenzt, was ein hohes, impulsförmiges Anlaufmoment des Starters zur Folge haben kann. Dies führt zu einer erhöhten mechanischen Beanspruchung, welche die Lebensdauer des Starters verringert. Darüber hinaus tragen die Spitzenströme zu starken Spannungseinbrüchen im konventionellen Bordnetz sowie zu einer Beeinträchtigung der elektromagnetischen Verträglichkeit (EMV) bei.

Zur gezielten Begrenzung der Spitzenströme kann beispielsweise ein elektrischer Widerstand mit einem bestimmten Temperaturkoeffizienten in einem Hauptstrompfad eines elektromagnetisch erregbaren Läufers des Elektromotors angeordnet bzw. eine Stromtaktung, wie sie in der Druckschrift EP 1 369 569 beschrieben ist, vorgesehen werden, wodurch die Verlustleistung reduziert und ein höherer Wirkungsgrad erreicht werden können. Bei einer Taktung von hohen Strömen entstehen jedoch aufgrund von stets vorhandenen Zuleitungsinduktivitäten Spannungs- bzw. Stromspitzen, welche auch weitere Fahrzeugkomponenten elektromagnetisch negativ beeinflussen können.

Aus der JP 2006 229142 A ist eine Vorrichtung zum Glätten und Stabilisieren des Fahrens eine Fahrzeugs bekannt, in dem ein Einbruch einer Batteriespannung verhindert wird, indem dem Motorstartsystem ein Arbeitsstrom zur Verfügung gestellt wird.

Aus der JP 2004 254 376 A ist ein hochspannungsfähiger Inverter für Fahrzeuge bekannt, der nicht durch die Ausgangsspannung der Batterie limitiert ist, auch dann nicht, wenn eine momentan starke Antriebskraft des Motors erforderlich ist.

### Offenbarung der Erfindung

Die Erfindung wird durch die Merkmale des Anspruchs 1 definiert. Vorteilhafte Ausgestaltungen und ein entsprechender Fahrzeugantrieb sind Gegenstand der Unteransprüche.

Die Erfindung basiert auf der Erkenntnis, dass zur Vermeidung von Spannungsspitzen und elektromagnetischen Störungen bei Versorgung eines Elektromotors, beispielsweise eines Starters, mit elektrischer Energie mittels einer Stromtaktung zur Strombegrenzung ein weiterer, zuschaltbarer Strompfad vorgesehen werden kann, welcher bei einem Stromabriss zuschaltbar ist und einen beispielsweise durch Leitungsinduktivitäten erzwungenen Strom aufnehmen und beispielsweise gegen Masse abführen kann.

Der weitere Strompfad kann in der Gestalt eines Kommutierungspfades ausgebildet sein und in der Gesamtschaltung zur Taktung des dem Elektromotor zuzuführenden Stroms integriert werden. Der weitere Strompfad kann in vorteilhafter Weise mittels eines Schalters, beispielsweise eines Transistorschalters, bereitgestellt oder unterbrochen werden. Dadurch kann eine erhebliche Verbesserung der EMV-Eigenschaften einer mit einem zusätzlichen Strompfad versehenen Schaltungsanordnung gegenüber einer herkömmlichen Schaltungsanordnung zur Taktung von Starterströmen erreicht werden.

Werden zur Energieversorgung eine Starterbatterie in der Gestalt einer Fahrzeugbatterie, und zur Taktung ein Taktschalter verwendet, so kann die Fahrzeugbatterie durch die Anordnung des weiteren Strompfades räumlich weiter von dem Taktschalter angeordnet werden, wodurch eine flexible Partitionierung der Leistungselektronik und der Starterbatterie möglich ist. So kann die Starterbatterie beispielsweise in einem Kofferraum und die Leistungselektronik in einem Fahrgastraum eines Fahrzeugs verbaut sein. Da der erfindungsgemäße, weitere Strompfad eine Reduktion von Spannungsspitzen herbeiführt, welche beim Takten des Starterstroms entstehen, können für die Anordnung elektronische Bauteile mit einer geringeren Durchbruchsspannung eingesetzt werden. Darüber hinaus wird eine Spitzenstrombelastung der Starterbatterie reduziert, wodurch deren Lebensdauer erhöht wird. Daher ist es auch möglich, Starterbatterien mit einem kleineren maximalen Spitzenstrom zum Versorgen eines Starters mit elektrischer Energie vorzusehen. Darüber hinaus sind beispielsweise beim Starten eines Verbrennungsmotors mittels des Starters geringere Geräusche bzw. Vibrationen zu erwarten, so dass sich der Fahrkomfort insgesamt erhöht. Ferner kann der Motorstart optimierter durchgeführt werden, so dass ein schnelleres Anlassen des Verbrennungsmotors mittels des Starters, welcher den Verbrennungsmotor beispielsweise mechanisch anschleppt, möglich ist. Die Starter-Lebensdauer wird durch die Reduktion der mechanischen, impulsförmigen Spitzenbelastung erhöht, wobei auch eine Verringerung der Spannungseinbruchsschübe in einem Fahrzeugbordnetz erreicht werden kann.

Gemäß einem Aspekt betrifft die Verbindung eine Vorrichtung zum Zuführen elektrischer Energie, beispielsweise eines elektrischen Stroms, zu einem Elektromotor, welcher beispielsweise als ein Starter für einen Verbrennungsmotor eingesetzt wird. Die Vorrichtung umfasst eine erste steuerbare Schaltanordnung, welche ausgebildet ist, in einem ersten Schaltzustand einen ersten Strompfad zur Stromzufuhr bereitzustellen und in einem zweiten Schaltzustand den ersten Strompfad zu unterbrechen. Die steuerbare Schaltanordnung kann beispielsweise getaktet und abwechselnd in die beiden Schaltzustände überführt werden. Die zweite steuerbare Schaltanordnung ist bevorzugt mit der ersten steuerbaren Schaltanordnung gekoppelt und ausgebildet, in einem ersten Schaltzustand einen zweiten Strompfad zur Stromaufnahme bereitzustellen und in einem zweiten Schaltzustand den zweiten Strompfad zu unterbrechen. Bevorzugt wird der zweite Strompfad zugeschaltet, um bei Unterbrechung des ersten Strompfades den mittels der beispielsweise Leitungsinduktivitäten aufgeprägte Strom durch die Vorrichtung aufzunehmen. Wird die erste steuerbare Schaltanordnung getaktet, so kann die zweite steuerbare Schaltanordnung beispielsweise gegenphasig zu der Taktung der ersten steuerbaren Schaltanordnung getaktet werden. Die Vorrichtung kann sowohl in konventionellen Fahrzeugantrieben als auch in hybriden Fahrzeugantrieben verwendet werden.

Gemäß einer Ausführungsform ist zur Ansteuerung der steuerbaren Schaltanordnungen eine Steuerungseinrichtung vorgesehen, welche die erste steuerbare Schaltanordnung und/oder die zweite steuerbare Schaltanordnung jeweils in den ersten Schaltzustand und/oder in den zweiten Schaltzustand überführt. Bevorzugt ist die Steuerungseinrichtung ausgebildet, bei oder nach Überführen der ersten Schaltanordnung in den zweiten Schaltzustand die zweite Schaltanordnung in den ersten Schaltzustand zu überführen, wodurch in vorteilhafter Weise die vorgenannte Taktungsgegenphasigkeit erzielt werden kann.

Gemäß einer Ausführungsform ist die Steuerungsvorrichtung ausgebildet, bei Überführen der ersten Schaltanordnung in den zweiten Schaltzustand die zweite Schaltanordnung in den ersten Schaltzustand zu überführen. Die beiden Schaltzustände sind bevorzugt voneinander abhängig, wobei die zweite Schaltanordnung beispielsweise mit einem komplementären Taktsignal, welches durch eine Negierung des der ersten steuerbaren Schaltanordnung zuzuführenden Taktsignals erzeugt werden kann, angesteuert werden kann.

Gemäß einer Ausführungsform verbindet der erste Strompfad im durchgeschalteten Zustand einen Eingang der ersten steuerbaren Schaltanordnung mit deren Ausgang, um eine elektrische Verbindung herzustellen. Dadurch wird eine vorteilhafte Realisierung des ersten Strompfades erreicht.

Gemäß einer Ausführungsform verbindet der zweite Strompfad einen Eingang der ersten steuerbaren Schaltanordnung mit einem Masseanschluss, so dass vorteilhaft eine rasche Aufnahme des in den Eingang der ersten Schaltanordnung fließenden Stroms möglich ist.

Gemäß einer Ausführungsform umfassen die beiden steuerbaren Schaltanordnungen jeweils einen steuerbaren Schalter, beispielsweise jeweils einen Transistorschalter, welcher bevorzugt vorgesehen ist, den jeweiligen Strompfad bereitzustellen oder zu unterbrechen. Der jeweilige Strompfad wird somit in vorteilhafter Weise jeweils durch einen steuerbaren Schalter realisiert.

Gemäß einer Ausführungsform ist der Schalter der zweiten steuerbaren Schaltanordnung beispielsweise mit einem Masseanschluss über eine Kapazität verbunden, so dass in vorteilhafter Weise insbesondere hochfrequente Stromanteile rasch aufgenommen und gegen Masse abgeführt werden können.

Gemäß einer Ausführungsform ist parallel zu dieser Kapazität beispielsweise ein mittels eines weiteren Schalters zuschaltbarer Widerstand angeordnet, welcher in vorteilhafter Weise einen Kurzschlussstrom in den zweiten Strompfad verhindert.

Gemäß einer Ausführungsform kann parallel zu dem steuerbaren Schalter der zweiten steuerbaren Schaltanordnung eine in Sperrrichtung betreibbare Diode angeordnet sein, welche in vorteilhafter Weise einen Abfluss der in der Kapazität gespeicherten Ladung insbesondere bei geöffnetem Schalter in Richtung des Starters ermöglicht, was zu einer Steigerung der Energieeffizienz beiträgt.

Gemäß einer Ausführungsform ist ein Ausgang der ersten steuerbaren Schaltanordnung über eine in Sperrrichtung betriebene Diode mit einem Massepotenzial gekoppelt, wodurch in vorteilhafter Weise ein Überspannungsschutz realisiert wird.

Gemäß einer Ausführungsform ist ein Eingang der ersten steuerbaren Schaltanordnung mit einem positiven oder mit einem negativen Spannungsanschluss einer Starterbatterie verbindbar. Die Starterbatterie kann ein integraler Bestandteil der Vorrichtung oder ein separates Element sein.

Gemäß einer Ausführungsform ist die Steuereinrichtung ausgebildet, die erste steuerbare Schaltanordnung periodisch in den ersten Schaltzustand und/oder in den zweiten Schaltzustand zu überführen, wodurch in vorteilhafter Weise eine Stromtaktung realisiert werden kann.

Gemäß einem weiteren Aspekt betrifft die Erfindung einen elektrischen Fahrzeugantrieb mit einem Elektromotor, beispielsweise einem Starter für einen Verbrennungsmotor in einem Hybridantrieb, und der erfindungsgemäßen Vorrichtung zum Zuführen elektrischer Energie zu dem Elektromotor, wobei ein Ausgang der ersten steuerbaren Schaltanordnung mit einem Stromeingangsanschluss des Elektromotors, welcher beispielsweise mit einem Hauptstrompfad eines elektromagnetisch erregbaren Läufers des Elektromotors verbunden ist, verbunden ist.

Gemäß einem Aspekt betrifft die Erfindung ein Verfahren zum Versorgen eines Elektromotors mit elektrischem Strom mit Zuführen elektrischer Energie zu dem Elektromotor mittels einer ersten steuerbaren Schaltanordnung, welche in einem ersten Schaltzustand einen ersten Strompfad zur Energiezufuhr bereitstellt und in einem zweiten Schaltzustand den ersten Strompfad unterbricht, Bereitstellen eines zweiten Strompfads mittels einer zweiten steuerbaren Schaltanordnung zur Stromaufnahme, wenn der erste Strompfad unterbrochen wird, wobei der zweite Strompfad bei Bereitstellung des ersten Strompfads unterbrochen wird, und Überführen der ersten steuerbaren Schaltanordnung und der zweiten steuerbaren Schaltanordnung in den ersten Schaltzustand oder in den zweiten Schaltzustand, wobei bei Überführen der ersten Schaltanordnung in den zweiten Schaltzustand die zweite Schaltanordnung in den ersten Schaltzustand überführt wird.

Weitere Verfahrensschritte ergeben sich unmittelbar aus der Funktionalität der erfindungsgemäßen Vorrichtung zum Versorgen des Elektromotors mit elektrischer Energie.

Weitere Ausführungsbeispiele werden Bezug nehmend auf die beiliegenden Figuren näher erläutert. Es zeigen:
Fig. 1 ein prinzipielles Schaltbild einer Vorrichtung zum Zuführen elektrischer Energie zu einem Elektromotor;
Fig. 2 ein elektrisches Ersatzschaltbild der Vorrichtung aus Fig. 1; und
Fig. 3 ein prinzipielles Schaltbild einer Vorrichtung zum Zuführen elektrischer Energie zu einem Elektromotor.

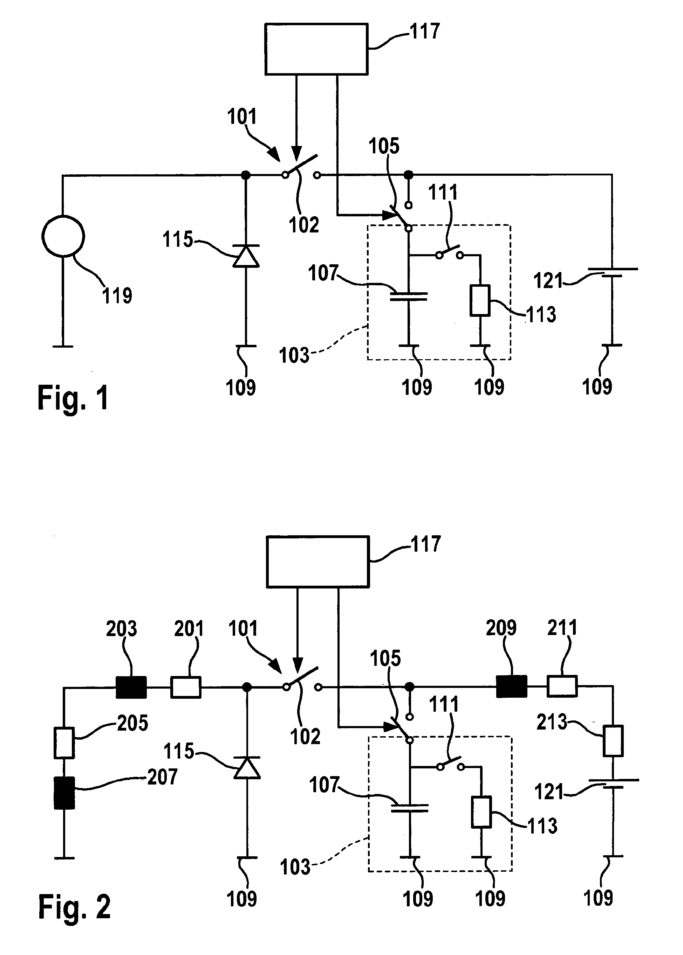

Fig. 1 zeigt eine Vorrichtung zum Versorgen eines Elektromotors mit elektrischer Energie. Die Vorrichtung umfasst eine erste steuerbare Schaltanordnung 101, beispielsweise einen Schalter, und eine mit einem Eingang der ersten steuerbaren Schaltanordnung 101 mit einem Schalter 102 verbundenen zweiten steuerbaren Schaltanordnung 103. Die zweite steuerbare Schaltanordnung 103 umfasst beispielsweise einen steuerbaren Schalter 105, welcher über eine Kapazität 107, welche beispielsweise ein Doppelschichtkondensator sein kann, mit einem Masseanschluss 109 verbunden ist. Parallel zu der Kapazität 107 ist mittels eines Schalters 111 ein Widerstand 113 schaltbar angeordnet. Die Vorrichtung umfasst ferner eine in Sperrrichtung angeordnete Diode 115, welche einen Ausgang der steuerbaren Schaltanordnung 111 mit dem Masseanschluss 109 verbindet.

Darüber hinaus ist eine Steuerungseinrichtung 117 vorgesehen, die steuerbaren Schaltanordnungen 101 und 103 zu steuern.

Die in Fig. 1 dargestellte Vorrichtung kann beispielsweise einen Elektromotor 119, beispielsweise einen Starter, mit einer Starterbatterie 121 verbinden. Dabei ist die zweite steuerbare Schaltanordnung parallel zu der Starterbatterie 121 angeordnet.

Zum Zuführen elektrischer Energie, beispielsweise zum Zuführen von Strom zu dem Elektromotor 119 wird ein erster Strompfad durch Schließen des Schalters 102 der steuerbaren Schaltanordnung 101 bereitgestellt, wobei der Schalter 105 der zweiten steuerbaren Schaltanordnung 103 geöffnet bleibt oder geöffnet wird. Bei oder nach Öffnen des Schalters der steuerbaren Schaltanordnung 101 wird der Schalter 105 der zweiten steuerbaren Schaltanordnung 103 geschlossen, wodurch ein zweiter Strompfad zur Stromaufnahme bereitgestellt wird. Die Stromtaktung wird mittels der ersten steuerbaren Schaltanordnung 101 durchgeführt, wobei die zweite steuerbare Schaltanordnung 103, beispielsweise im Gegentakt, einen Stromkommutierungszweig mittels des Schalters 105 bereitstellt, wodurch die Kapazität 109 die in den Eingang der ersten steuerbaren Schaltanordnung 101 fließenden Strom aufnehmen kann. Der Widerstand 113 wird als Entladewiderstand verwendet, welcher bei Bereitstellung des zweiten Strompfads möglichen Kurzschluss der Starterbatterie 121 verhindert.

Die Diode 115 bildet beispielsweise ein passives Freilaufelement. Gemäß einer Ausführungsform ist auch ein aktiver Freilauf beispielsweise mithilfe eines Transistors möglich.

Fig. 2 zeigt ein elektrisches Ersatzschaltbild der in Fig. 1 dargestellten Vorrichtung mit einem Widerstand 201 der Starterleitung, einer Induktivität 203 der Starterleitung, einem Starterwiderstand 205 und einer Starterinduktivität 207. Ferner sind eine Induktivität 209 sowie ein Widerstand 211 der Starterbatteriezuleitung eingezeichnet. Die Starterbatterie 121 hat einen Starterinnenwiderstand 213.

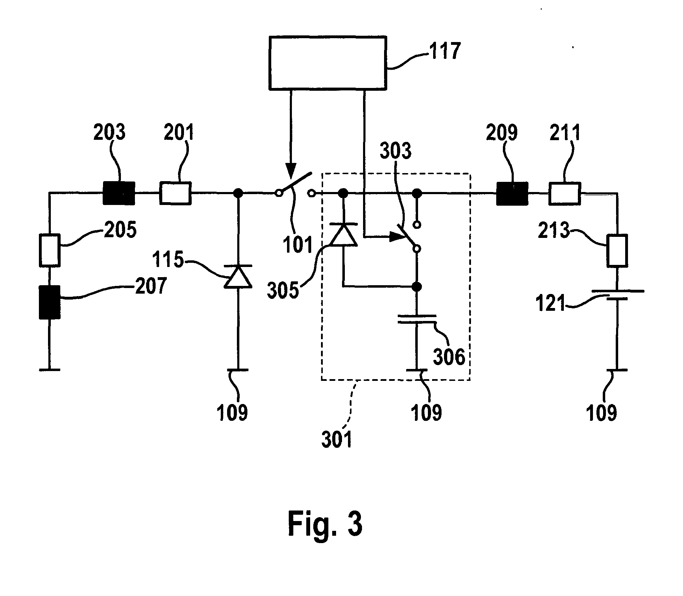

Fig. 3 zeigt eine Vorrichtung zum Zuführen elektrischer Energie zu einem Elektromotor, wobei im Unterschied zu der in Fig. 2 dargestellten Anordnung eine zweite Schaltanordnung 301 mit einem steuerbaren Schalter 303 und einer Kapazität 306 vorgesehen ist. Im Unterschied zu den in den Figuren 1 und 2 dargestellten Ausführungsbeispielen ist parallel zu dem steuerbaren Schalter 303 eine Diode 305 in Sperrrichtung angeordnet. Der steuerbare Schalter 303 kann beispielsweise als ein Halbleiterschalter in der Form eines MOS-FETs realisiert werden, wobei die Diode 305 durch eine Substratdiode des MOS-FETs gebildet werden kann.

Die erfindungsgemäße, zweite Schaltanordnung 103 bzw. 301 ist bevorzugt in einer baulichen Einheit realisiert, wodurch in vorteilhafter Weise, ein kurzer, zweiter Strompfad sichergestellt werden kann.

Zum Betreiben des Elektromotors 119, beispielsweise zum Anschleppen eines Verbrennungsmotors mittels des Elektromotors 119, wird zunächst die erste Schaltanordnung 101 durch beispielsweise ein Schließen des Schalters 102 in einen ersten Schaltzustand überführt, in welchem der erste Strompfad bereitgestellt wird. Der Strom durch den als Starter fungierenden Elektromotor 119 wird dann, gedämpft durch die Systeminduktivitäten, ansteigen, bis dessen Stromamplitude einen Grenzwert erreicht hat, der als ein maximaler Stromgrenzwert vorgesehen ist und beispielsweise 600 A betragen kann. Die Steuerungseinrichtung 117 schließt dann den Schalter 105 der zweiten Schaltanordnung, wodurch ein zweiter Strompfad bereitgestellt wird. Danach und beispielsweise in Abhängigkeit von einer jeweiligen Zeitkonstanten in den jeweiligen Stromkreisen wird der Schalter 102 der ersten Schaltanordnung geöffnet. Dadurch wird der Strom aus der Batterie 121 in dem durch den zweiten Strompfad repräsentierten Kommutierungszweig bzw. in den Kommutierungsspeicher 107 fließen. Dies verhindert einen abrupten Abriss des nunmehr hohen Stroms, welcher durch die Leitungsinduktivität der Batterie fließt. Der Kommutierungsspeicher 107 ist dabei vorgesehen, diese Energie zwischenzuspeichern. Von besonderem Vorteil ist dabei, dass der Schalter 102 der ersten Schaltanordnung 101 dann geöffnet werden kann, wenn die Stromamplitude des Stroms durch diesen Schalter nahezu den Wert 0 oder einen sehr kleinen Wert erreicht hat. Damit werden die Schaltverluste wie in der ersten Schaltanordnung 101 reduziert.

Der Strom durch den Starter 119, welcher durch die Starterinduktivität weitergetrieben wird, kann über das Freilaufelement 115 weiterfließen, so dass ein abrupter Stromabriss im Starterkreis ebenfalls vermieden werden kann. Da im gesamten System somit abrupte Stromveränderungen vermieden werden, besteht nicht mehr das Problem von induzierten, hohen Überspannungen. Bei plötzlichem Abriss von beispielsweise 600 A könnten sonst Überspannungen bis zu mehreren 100 V entstehen.

Sinkt der Strom durch den Starter 119 wieder unter einen vorbestimmten unteren Grenzwert mit beispielsweise einer Hysterese um den vorgegebenen Stromsollwert, so wird der Schalter 102 zum erneuten Bereitstellen des ersten Strompfads geschlossen und der Schalter 115 der zweiten Schaltanordnung 103 in Folge wieder geöffnet.

Wenn der Startstrom nach einem Anlaufen bzw. einem Andrehen des Starters 119 bzw. des Verbrennungsmotors absinkt und nur noch eine verringerte Starterleistung erforderlich ist, so kann der Schalter 102 der ersten Schaltanordnung 101 wieder geschlossen und der Schalter 105 wieder geöffnet werden.

Die Kapazität 107 kann sich während eines Startvorgangs zwar aufladen, die insgesamt gespeicherte Ladung ist jedoch begrenzt, weil die Kommutierung nur während der kurzen Abschaltphasen des Starterstroms stattfindet. Damit die Kapazität 107 für den nächsten Startvorgang wieder zur Verfügung steht, kann sie während der Motorlaufphase beispielsweise über den geeignet gewählten Entladewiderstand 113 und über den Schalter 111 wieder entladen werden. In vorteilhafter Weise kann die Kapazität 107 daher schon während der Startphase entladen werden, insbesondere in den Zeitabschnitten, in welchen der Schalter 105 geöffnet ist. Durch eine geeignete Wahl des Entladewiderstandes 113 kann der Schalter 111 für verhältnismäßig kleine Ströme dimensioniert werden.

Wie bereits erwähnt kann der Strom durch die Anordnung beim Kommutieren beispielsweise über den Schalter 105 in die Kapazität 306 geleitet werden. Dabei ist die Kapazität 306 beispielsweise so zu wählen, dass eine an ihr anliegende Spannung so weit ansteigt und beispielsweise gleich oder größer als 12 V oder 14 V ist, dass die Diode 305 bei geöffnetem Schalter 303 und geschlossener erster Schaltanordnung 101 durch einen Spannungseinbruch der Starterbatterie 121 in Flussrichtung leitend wird, so dass sich die Kapazität 306 entladen kann. Der Strom aus der Kapazität 306 unterstützt dabei zusätzlich den Startvorgang. In der nächsten Kommutierungsphase wird die Kapazität 306 wieder aufgeladen, wobei im Unterschied zu dem Betrieb der in Fig. 1 dargestellten Vorrichtung die Kapazität 306 während der Stromtaktung nicht vollständig entladen wird.

Durch die erfindungsgemäße Stromtaktung wird somit ein geringerer, mittlerer Anlaufstrom erzeugt, welcher einen geringeren Spannungseinbruch im Bordnetz des Fahrzeugs insbesondere beim Motorstart verursacht. Das reduziert die notwendigen Maßnahmen zur Bordnetzstützung insbesondere bei Start-Stopp-Systemen. Durch den gesteuerten Starteranlauf und die reduzierten Anlaufströme kann die Größe der Starterbatterie auch bei einer Auslegung für tiefe Temperaturen weiter reduziert werden. Da der Starterstrom erfindungsgemäß nicht hart geschaltet wird, sondern die Stromflüsse im Starterkreis und in der Zuleitung von der Batterie 121 weitgehend aufgrund des beispielsweise periodisch bereitgestellten zweiten Strompfades weitgehend aufrechterhalten werden, wodurch ein quasi kontinuierlicher Stromfluss gewährleistet ist, werden die EMV-Eigenschaften des Systems erheblich verbessert.

## Patentansprüche

1. Vorrichtung zum Zuführen elektrischer Energie zu einem Elektromotor, mit:
einer ersten steuerbaren Schaltanordnung (101), welche ausgebildet ist, in einem ersten Schaltzustand einen ersten Strompfad zur Energiezufuhr bereitzustellen und in einem zweiten Schaltzustand den ersten Strompfad zu unterbrechen;
einer zweiten steuerbaren Schaltanordnung (103), welche mit der ersten steuerbaren Schaltanordnung gekoppelt und ausgebildet ist, in einem ersten Schaltzustand einen zweiten Strompfad zur Stromaufnahme bereitzustellen und in einem zweiten Schaltzustand den zweiten Strompfad zu unterbrechen; und einer Steuerungseinrichtung (117) zum Überführen der ersten steuerbaren Schaltanordnung (101) und der zweiten steuerbaren Schaltanordnung (103) in den ersten Schaltzustand oder in den zweiten Schaltzustand, wobei die Steuerungseinrichtung (117) ausgebildet ist, bei oder nach Überführen der ersten Schaltanordnung (101) in den zweiten Schaltzustand die zweite Schaltanordnung (103) in den ersten Schaltzustand zu überführen,
wobei die zweite steuerbare Schaltanordnung (103) einen steuerbaren Schalter (105) aufweist, welcher über eine Kapazität (107) mit einem Masseanschluss (109) verbunden ist,
**dadurch gekennzeichnet, dass** parallel zu dem steuerbaren Schalter (105) eine Diode (305) in Sperrrichtung angeordnet ist.

2. Vorrichtung gemäß Anspruch 1, wobei die Steuerungsvorrichtung (117) ausgebildet ist, bei oder nach Überführen der ersten Schaltanordnung (101) in den zweiten Schaltzustand die zweite Schaltanordnung (103) in den ersten Schaltzustand zu überführen.

3. Vorrichtung gemäß einem der vorstehenden Ansprüche, wobei der erste Strompfad einen Eingang der ersten steuerbaren Schaltanordnung (101) mit einem Ausgang der ersten steuerbaren Schaltanordnung (101) elektrisch verbindet.

4. Vorrichtung gemäß einem der vorstehenden Ansprüche, wobei der zweite Strompfad einen Eingang der ersten steuerbaren Schaltanordnung (101) mit einem Masseanschluss (109) elektrisch verbindet.

5. Vorrichtung gemäß einem der vorstehenden Ansprüche, wobei die erste steuerbare Schaltanordnung (101) und die zweite steuerbare Schaltanordnung (103) jeweils einen steuerbaren Schalter (102, 105), insbesondere einen Transistorschalter, aufweisen.

6. Vorrichtung gemäß einem der vorherstehenden Ansprüche, wobei parallel zu der Kapazität (107) ein Widerstand (113) insbesondere schaltbar angeordnet ist.

7. Vorrichtung gemäß einem der vorstehenden Ansprüche, wobei ein Ausgang der ersten steuerbaren Schaltanordnung (101) über eine in Sperrrichtung angeordnete Diode (115) mit einem Massepotential (109) gekoppelt ist.

8. Vorrichtung gemäß einem der vorstehenden Ansprüche, wobei ein Eingang der ersten steuerbaren Schaltanordnung (101) mit einem positiven oder negativen Spannungsanschluss einer Starterbatterie (121) verbindbar oder verbunden ist.

9. Vorrichtung gemäß einem der vorstehenden Ansprüche, wobei die Steuereinrichtung (117) ausgebildet ist, die erste steuerbare Schaltanordnung (101) periodisch in den ersten Schaltzustand und/oder in den zweiten Schaltzustand zu überführen.

10. Elektrischer Fahrzeugantrieb, mit:
einem Elektromotor (119), insbesondere einem Starter für einen Verbrennungsmotor in einem Hybridantrieb; und
der Vorrichtung zum Zuführen elektrischer Energie zu dem Elektromotor (119) gemäß einem der Ansprüche 1 bis 9, wobei ein Ausgang der ersten steuerbaren Schaltanordnung (101) mit einem Stromeingangsanschluss des Elektromotors (119) verbunden ist.

## Claims

1. Apparatus for supplying electrical energy to an electric motor, comprising:
a first controllable switching arrangement (101), which is designed, in a first switching state, to provide a first current path for the supply of energy and, in a second switching state, to interrupt the first current path;
a second controllable switching arrangement (103), which is coupled to the first controllable switching arrangement and is designed, in a first switching state, to provide a second current path for current consumption and, in a second switching state, to interrupt the second current path; and
a control device (117) for transferring the first controllable switching arrangement (101) and the second controllable switching arrangement (103) into the first switching state or into the second switching state,
wherein the control device (117) is designed to transfer the second switching arrangement (103) into the first switching state during or after transfer of the first switching arrangement (101) into the second switching state,
wherein the second controllable switching arrangement (103) has a controllable switch (105), which is connected to a ground connection (109) via a capacitance (107),
**characterized in that** a diode (305) in the reverse direction is arranged in parallel with the controllable switch (105).

2. Apparatus according to Claim 1, wherein the control apparatus (117) is designed to transfer the second switching arrangement (103) into the first switching state during or after transfer of the first switching arrangement (101) into the second switching state.

3. Apparatus according to one of the preceding claims, wherein the first current path electrically connects an input of the first controllable switching arrangement (101) to an output of the first controllable switching arrangement (101).

4. Apparatus according to one of the preceding claims, wherein the second current path electrically connects an input of the first controllable switching arrangement (101) to a ground connection (109).

5. Apparatus according to one of the preceding claims, wherein the first controllable switching arrangement (101) and the second controllable switching arrangement (103) each have a controllable switch (102, 105), in particular a transistor switch.

6. Apparatus according to one of the preceding claims, wherein a resistor (113) is arranged, in particular switchably, in parallel with the capacitance (107).

7. Apparatus according to one of the preceding claims, wherein an output of the first controllable switching arrangement (101) is coupled to a ground potential (109) via a diode (115) arranged in the reverse direction.

8. Apparatus according to one of the preceding claims, wherein an input of the first controllable switching arrangement (101) is connectable or connected to a positive or negative voltage connection of a starter battery (121).

9. Apparatus according to one of the preceding claims, wherein the control device (117) is designed to transfer the first controllable switching arrangement (101) into the first switching state and/or into the second switching state periodically.

10. Electric vehicle drive, comprising:
an electric motor (119), in particular a starter for an internal combustion engine in a hybrid drive; and
the apparatus for supplying electrical energy to the electric motor (119) according to one of Claims 1 to 9, wherein an output of the first controllable switching arrangement (101) is connected to a current input connection of the electric motor (119).

## Revendications

1. Dispositif d'amenée d'énergie électrique à un moteur électrique, le dispositif présentant:
un premier circuit de commutation asservi (101) configuré pour définir dans un premier état de commutation un premier parcours de courant pour l'amenée d'énergie et pour interrompre le premier parcours de courant dans un deuxième état de commutation,
un deuxième circuit de commutation asservi (103) couplé au premier circuit de commutation asservi et configuré pour, dans un premier état de commutation, définir un deuxième parcours de courant permettant la reprise de courant et pour interrompre le deuxième parcours de courant dans un deuxième état de commutation et
un dispositif de commande (117) qui amène le premier circuit de commutation asservi (101) et le deuxième circuit de commutation asservi (103) dans le premier état de commutation ou dans le deuxième état de commutation,
le dispositif de commande (117) étant configuré pour amener le deuxième circuit de commutation (103) dans le premier état de commutation pendant ou après le passage du premier circuit de commutation (101) dans le deuxième état de commutation,
le deuxième circuit de commutation asservi (103) présentant un commutateur asservi (105) raccordé à une borne de masse (109) par l'intermédiaire d'une capacité (107),
**caractérisé en ce que**
une diode (305) est disposée dans la direction de blocage parallèlement au deuxième commutateur asservi (105).

2. Dispositif selon la revendication 1, dans lequel le dispositif de commande (117) est configuré pour amener le deuxième circuit de commutation (103) dans le premier état de commutation pendant ou après qu'il a amené le premier circuit de commutation (101) dans le deuxième état de commutation.

3. Dispositif selon l'une des revendications précédentes, dans lequel le premier parcours de courant raccorde électriquement une entrée du premier circuit de commutation asservi (101) à une sortie du premier circuit de commutation asservi (101).

4. Dispositif selon l'une des revendications précédentes, dans lequel le deuxième parcours de courant raccorde électriquement une entrée du premier circuit de commutation asservi (101) à une borne de masse (109).

5. Dispositif selon l'une des revendications précédentes, dans lequel le premier circuit de commutation asservi (101) et le deuxième circuit de commutation asservi (103) présentent chacun un commutateur asservi (102, 105) et en particulier un commutateur à transistor.

6. Dispositif selon l'une des revendications précédentes, dans lequel une résistance (113) est disposée en particulier de manière commutable parallèlement à la capacité (107).

7. Dispositif selon l'une des revendications précédentes, dans lequel une sortie du premier circuit de commutation asservi (101) est raccordée à un potentiel de masse (109) par l'intermédiaire d'une diode (115) disposée dans la direction de blocage.

8. Dispositif selon l'une des revendications précédentes, dans lequel une entrée du premier circuit de commutation asservi (101) peut être raccordée ou est raccordée à une borne de tension positive ou à une borne de tension négative d'une batterie de démarrage (121).

9. Dispositif selon l'une des revendications précédentes, dans lequel le dispositif de commande (117) est configuré pour amener périodiquement le premier circuit de commutation asservi (101) dans le premier état de commutation et/ou dans le deuxième état de commutation.

10. Entraînement électrique de véhicule présentant
un moteur électrique (119), en particulier un démarreur du moteur à combustion interne d'un entraînement hybride et
le dispositif d'amenée d'énergie électrique au moteur électrique (119) selon l'une des revendications 1 à 9,
une sortie du premier circuit de commutation asservi (101) étant raccordée à une borne d'entrée de courant du moteur électrique (119).
